# FASCICULE DE BREVET EUROPEEN

(11) **EP 1 092 507 B1**
(45) Date de publication et mention de la délivrance du brevet: **02.01.2003**
(21) Numéro de dépôt: 99203356.3
(22) Date de dépôt: 14.10.1999
(51) Int. Cl.: B24D 7/06, B23K 26/00, B23K 31/02

(54) **Procédé de fabrication d'un disque abrasif de meulage**
Herstellungsverfahren einer Schleifscheibe
Grinding disc manufacturing method

(43) Date de publication de la demande: 18.04.2001
(73) Titulaire: Carbodiam S.A., 1495 Tilly (BE)
(72) Inventeur: Chevalier, Jean-Pierre, 1495 Tilly (BE); Boland, François, 1495 Tilly (BE)
(74) Mandataire: Vandeberg, Marie-Paule L.G.

(56) Documents cités:
- US-A- 4 689 919
- US-A- 5 868 125
- PATENT ABSTRACTS OF JAPAN vol. 010, no. 378 (M-546), 17 décembre 1986 (1986-12-17) & JP 61 169183 A (NIPPON STEEL CORP), 30 juillet 1986 (1986-07-30)

## Description

La présente invention est relative à un procédé de fabrication d'un disque abrasif de meulage comprenant un support métallique muni de segments comportant des grains abrasifs et un liant d'enrobage.

Les outils de meulage existent dans une grande variété d'applications et de dimensions.

Ces outils sont traditionnellement développés sur base de particules abrasives (oxyde d'alumine, carbure de silicium, etc.) incorporés dans des liants organiques ou vitrifiés.

L'usure de ce type d'outils étant très importante, on a développé des outils abrasifs de meulage dans lesquels des segments comportant des grains abrasifs sertis dans un liant d'enrobage métallique sont associés à un support métallique. Cette association est obtenue par soudage, brasage, ou encore par frittage direct du liant d'enrobage sertissant les grains abrasifs sur le support métallique de l'outil.

Ces procédés d'assemblage offrent, à froid, des propriétés mécaniques suffisantes pour assurer la cohésion de l'outil face aux sollicitations extérieures (efforts de coupe, choc, vibrations, force centrifuge, etc.). Si l'outil fonctionne à sec, ou avec un refroidissement insuffisant, cette cohésion n'est plus garantie, notamment parce que les éléments intercalaires entre le support métallique et le liant, à savoir des alliages de cuivre, d'étain, d'argent ou de cadmium, ont des points de fusion bas (de 500 à 900 °C) et présentent déjà une diminution de résistance mécanique vers 200 °C.

On connaît une technique de fabrication de disques abrasifs destinés au sciage de pierres naturelles ou artificielles, dans laquelle on soude des segments abrasifs à la périphérie du disque au moyen d'un faisceau laser parcourant, en partie au moins, le périmètre de la surface de contact entre un segment et le disque (voir par exemple US-A-4689919).

La faible dimension du faisceau laser concentré à l'endroit de la soudure impose que la géométrie des pièces à associer soit précise et que, en tout cas, les jeux entre éléments à assembler soient inférieurs à la dimension du faisceau laser incident. Des segments de rayon intérieur trop faible par rapport au rayon du corps en acier ou trop grand, et présentant de ce fait des jeux de l'ordre du dixième de mm, ne sont pas soudés de manière continue et ne présentent donc pas toutes les garanties de sécurité.

Enfin, tous les matériaux ne peuvent pas être soudés de façon sûre par faisceau laser. Particulièrement des liants contenant des matériaux optiquement réfléchissant tels que le cuivre et l'argent ne pourront être soudés avec toutes les garanties de sécurité. Les segments doivent dès lors être fabriqués avec une couche intermédiaire soudable qui permet d'associer ce segment sur le corps d'outil.

Cette technique d'assemblage par soudage laser, qui malgré les inconvénients énoncées plus haut, donne satisfaction dans son application aux disques de sciage, n'a jamais été appliquée au cas des disques de meulage, en raison des difficultés évoquées ci-après. Pour des disques abrasifs destinés au meulage ou au surfaçage, les segments sont appliqués sur la face avant du support métallique, et non à la périphérie de celui-ci. Un soudage laser réalisé par parcours d'un faisceau laser le long du périmètre du segment sur la face avant du support métallique impose, pour que la soudure soit fiable, que les tolérances de dimensions des segments soient meilleures que la largeur du faisceau laser, qui est de l'ordre de quelques dixièmes de mm, et que le faisceau laser parcoure très exactement ce périmètre. Une telle précision est difficile à réaliser.

Une autre limite de ce procédé est que la longueur maximale du cordon de soudure est égale au périmètre du segment, et que dans les applications où les segments sont soumis à de fortes sollicitations mécaniques, ce cordon de soudure peut s'avérer insuffisant.

La présente invention a pour but de fournir un procédé de fabrication de disques de meulage dans lequel des segments abrasifs sont associés à un support métallique, qui résiste à des températures élevées, et ne nécessite pas de segments de dimensions précises, et un parcours précis de ce contour.

Ce but est atteint par le procédé suivant la revendication 1. On fabrique un disque abrasif de meulage comportant au moins un support. Ce ou ces supports et ce disque comportent une face avant et une face arrière. Une zone périphérique de la face avant de ce disque est munie de segments abrasifs. Suivant l'invention, les segments abrasifs sont fixés sur le support, par soudage laser, le faisceau laser étant appliqué à la face arrière du support, en substance perpendiculairement à ce support. Le faisceau laser traverse donc l'épaisseur du support métallique et constitue une soudure à la surface de contact entre le support et le segment.

Dans une variante préférée de l'invention, le au moins un support est constitué par le disque proprement dit.

En suivant ce procédé, il est possible de réaliser un cordon de soudure à l'intérieur du périmètre d'un segment. Ce cordon peut consister en plusieurs sections, continues ou disjointes. On peut ainsi réaliser un cordon de soudure de longueur suffisante, en fonction de la résistance mécanique que l'on souhaite obtenir.

L'invention porte également sur un disque abrasif de meulage dans lequel les segments abrasifs sont fixés sur le support par soudage laser, le faisceau laser étant appliqué à la face arrière du support, en substance perpendiculairement à ce support.

D'autres particularités et avantages de l'invention ressortiront de la description ci-après d'un mode de réalisation avantageux, référence étant faite aux dessins annexés dans lesquels
- les fig 1 et 2 sont des vues en élévation et en coupe d'un disque de sciage connu de l'art antérieur;
- les fig 3 et 4 sont des vues de détail de ce disque mettant en évidence les problèmes résultant de tolérances sur les dimensions;
- la fig 5 montre un disque et un segment comportant une couche intermédiaire;
- les fig 6 et 7 sont des vues en élévation et en coupe d'un disque de meulage qui ne pourrait pas être réalisé sans rencontrer de difficulté;
- les fig 9 et 8 sont des vues en élévation et en coupe d'un disque de meulage suivant l'invention ;
- la fig 10 est une vue de détail en coupe, d'une soudure réalisée suivant l'invention;
- la fig 11 est une vue de détail en coupe, d'une autre soudure réalisée suivant l'invention dans laquelle le segment abrasif comporte une couche intermédiaire;
- la fig 12 à 16 sont des vues en élévation de la face arrière de disques de meulage suivant l'invention montrant plusieurs dispositions possibles du cordon de soudure;
- la fig 17 est une vue en élévation d'un disque de meulage suivant l'invention dans lequel les segments sont associés à des pièce métalliques démontables constituant les supports ;
- la fig 18 est une vue en élévation d'un disque de meulage suivant l'invention dans lequel les segments présentent une forme complexe ;
- la fig 19 est une vue en élévation d'un outil de meulage suivant l'invention dans lequel le support métallique est destiné à être monté sur un disque.

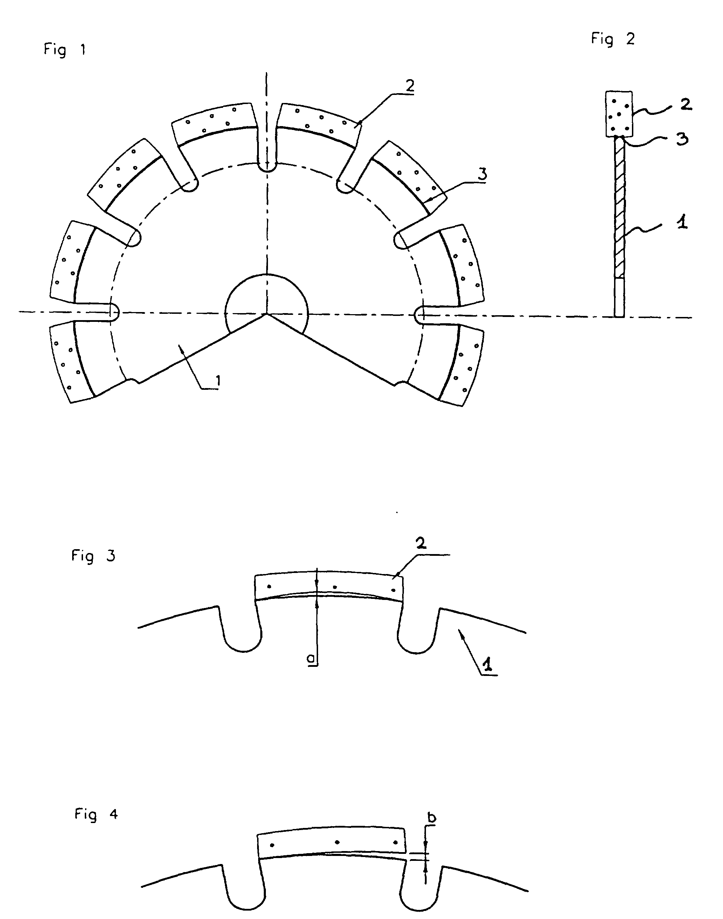

Les disques abrasifs de sciage représentés en élévation et en coupe aux figure 1 et 2 comportant un corps circulaire en acier 1 garni de segments abrasifs 2 assemblés par un ou deux cordons de soudure 3 réalisés par fusion laser. Si le rayon intérieur des segments 2 n'est pas parfaitement égal au rayon extérieur du disque 1, un interstice, représenté par a et b aux fig 3 et 4, apparaît. Si cet interstice est supérieur aux dimensions du faisceau laser de soudage, un défaut de soudure apparaît. Dans le cas des disques de sciage, on peut cependant maîtriser les paramètres géométriques de fabrication des segments et le guidage du faisceau laser pour que cet inconvénient ne soit pas insurmontable.

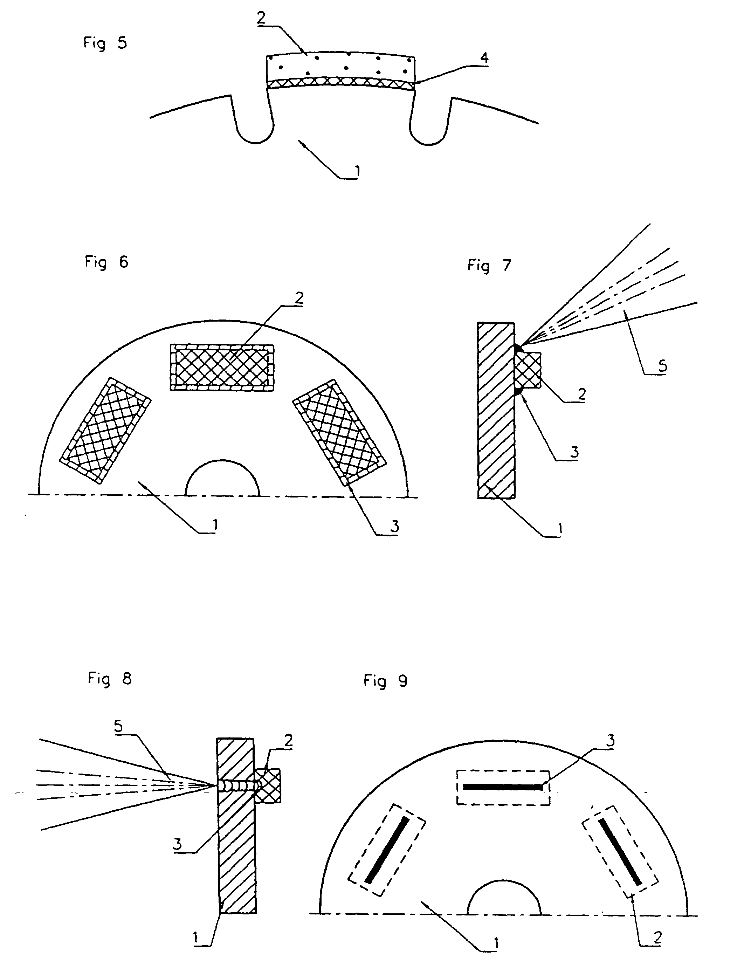

La figure 5 montre un disque de sciage dans lequel un segment 2 comporte, à sa surface de contact avec le disque, une couche intermédiaire 4. Cette couche intermédiaire 4 fait partie intégrante du segment, mais est constituée d'un liant apte à être soudé aisément par laser. En outre, cette couche intermédiaire peut ne pas contenir de grains abrasifs.

Les figures 6 et 7 montrent un disque de meulage 1, dans lequel les segments abrasifs 2 sont appliqués sur la face avant du support. Le segment a été soudé au support par application d'un faisceau laser 5 le long du périmètre de la surface de contact du segment et du support, pour constituer un cordon de soudure 3. Un tel procédé ne peut pas être appliqué en raison des difficultés de réaliser des segments de dimensions précises, et d'appliquer le faisceau laser 5 de manière précise sur le périmètre à souder.

Les figure 8 et 9 montrent un disque abrasif de meulage suivant l'invention. Le segment a été soudé au support par application d'un faisceau laser 5 à la face arrière du support, en substance perpendiculairement au support, à l'intérieur du périmètre de la surface de contact du segment et du support, pour constituer un cordon de soudure 3.

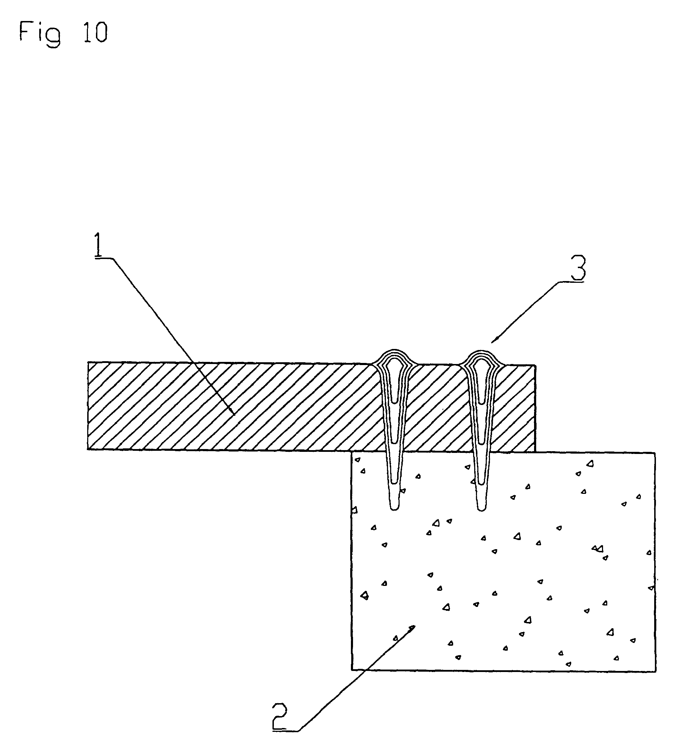

Avec un outillage adapté qui maintient les segments, une soudure par pénétration permet de réaliser des cordons tels que représentés en figure 10. Les paramètres de soudure (puissance du générateur, vitesse de déplacement, position du point focal, etc.) permettent d'ajuster la profondeur de pénétration du cordon de soudure dans le segment abrasif. Des essais intensifs ont montré que des profondeurs de pénétration de 0.1 mm à 1 mm permettent d'atteindre des valeurs de l'ordre de 250 N par mm de longueur de cordon de résistance à la rupture en cisaillement pour des liants à base de cobalt ou de fer et de 80 N par mm pour des liants contenant jusqu'à 30 % de cuivre, soudés dans les deux cas sur un support en acier contenant moins de 0.6 % de carbone équivalent.

Une bonne maîtrise des paramètres de soudage permet de limiter la profondeur de pénétration.

Dans cette zone, une inévitable dégradation du liant et une graphitisation du diamant se produit. Il s'agit d'une zone atteinte en fin de vie de l'outil et l'on peut généralement s'accommoder de ce défaut.

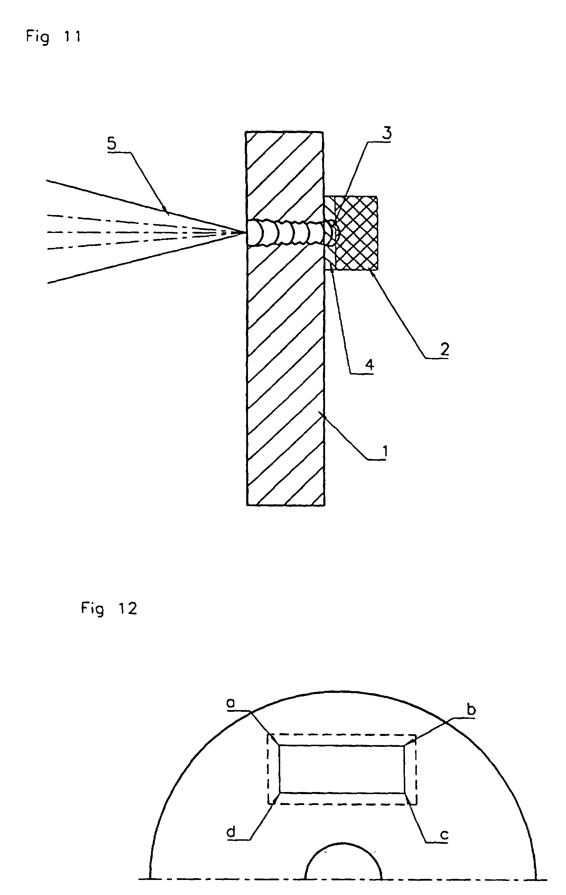

Ce défaut peut disparaître si l'on emploie, comme représenté en figure 11, des segments 2 présentant une zone ne comportant pas de grains abrasifs 4. Cette zone peut, pour des liants difficilement soudables, améliorer la résistance du cordon.

Le soudage laser s'applique aux matériaux aptes à absorber l'énergie du faisceau incident, et ne s'applique pas, ou difficilement, aux matériaux optiquement réflecteurs. L'intérêt de l'invention est également d'améliorer la tenue de cordons réalisés sur des segments comportant des liants optiquement réflecteurs, du fait que le support, généralement en acier, moins optiquement réflecteur, subit en premier l'incidence du faisceau.

Comme représenté à la figure 12, la trajectoire a b c d du faisceau laser se situe à l'intérieur du périmètre du segment. Des tolérances serrées sur les dimensions du segment ou une précision extrême sur la trajectoire du faisceau laser ne sont pas requises.

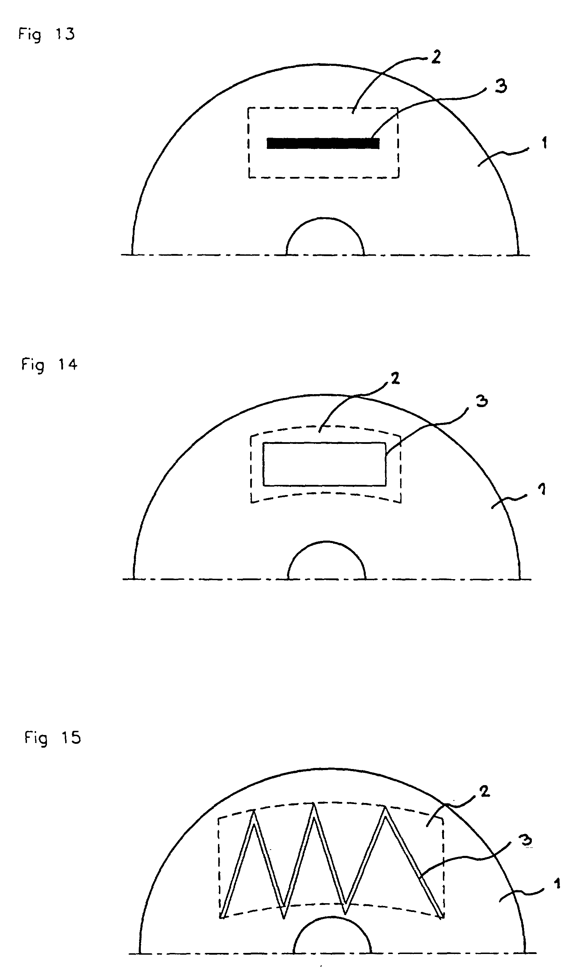

Selon les sollicitations des segments, les longueurs des trajectoires peuvent être adaptées . Les figures 13, 14 et 15 montrent respectivement des segments de taille et de forme différentes soudés selon une simple ligne, selon une trajectoire située légèrement à l'intérieur de la périphérie et selon un profil plus complexe.

L'invention peut s'appliquer à des formes simples de segments comme représentés en figure 13, 14 et 15.

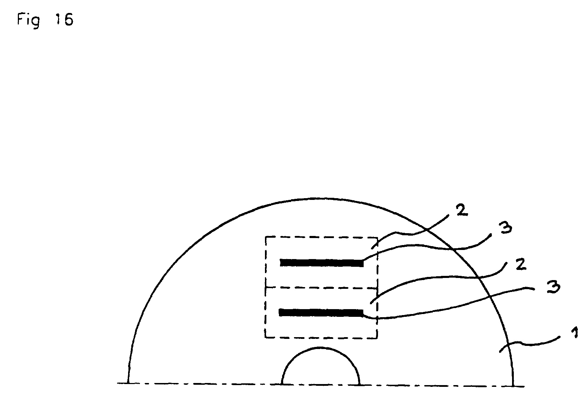

L'invention permet le soudage de segments jointifs ou quasi jointifs comme représenté en figure 16.

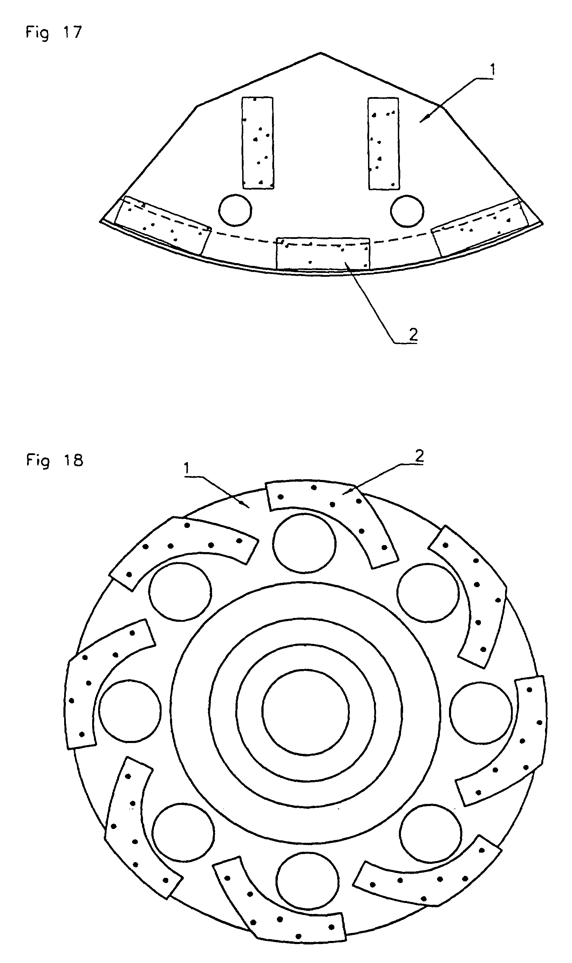

Les segments peuvent, comme représenté en figure 17, être associés à un corps métallique démontable. Ceci constitue un exemple de réalisation de l'invention où les supports 1 sont distincts du disque proprement dit.

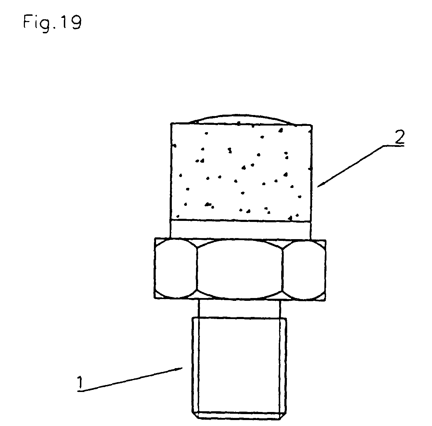

L'invention permet le soudage de formes plus complexes, comme représenté en figure 18, et des segments en forme de cylindres comme représenté en figure 19. Ce dernier cas constitue un autre exemple de réalisation de l'invention où les supports 1 sont distincts du disque proprement dit.

Un avantage additionnel du procédé suivant l'invention se présente lorsque les grains abrasifs comportent du diamant : le diamant est une variété allotropique instable du carbone qui, sollicité thermiquement, même sous une atmosphère protectrice, retourne à son état stable, le carbone graphite. Les procédés de soudure traditionnels, à savoir oxyacétylénique, électrique, TIG, MIG, etc. ne sont pas adaptés à la fabrication d'outils diamantés. En effet, le phénomène de graphitisation apparaît dès 900 °C, et dépend de la durée de la sollicitation thermique. Seul le soudage par fusion laser permet, par la précision géométrique du faisceau, de fabriquer des outils diamantés sans détruire une quantité trop importante de diamant.

## Revendications

1. Procédé de fabrication d'un disque abrasif de meulage, une face avant de ce disque étant munie d'au moins un segment abrasif, comportant au moins un support (1), le au moins un segment abrasif (2) étant fixé sur le au moins un support (1) par soudage laser, **caractérisée par** un faisceau laser (5) étant appliqué à la face arrière du au moins un support(1), en substance perpendiculairement à la face arrière de ce au moins support(1).

2. Procédé suivant la revendication 1 **caractérisé en ce que** le au moins un support(1) est constitué par le disque.

3. Procédé suivant l'une quelconque des revendications précédentes **caractérisé en ce que** le soudage du au moins un segment (2) comporte la réalisation d'une pluralité de cordons de soudure.

4. Procédé suivant l'une quelconque des revendications précédentes **caractérisé en ce que** au moins un segment (2) présente une couche intermédiaire (4) ne comportant pas de grains abrasifs.

5. Disque abrasif de meulage comportant un support (1), une face avant de ce disque étant munie d'au moins un segment abrasif, comportant au moins un support (1), le au moins un segment abrasif (2) étant fixé sur le au moins un support (1) par soudage laser, **caractérisé par** un faisceau laser (5) étant appliqué à la face arrière du au moins un support(1), en substance perpendiculairement à la face arrière de ce au moins support(1).

## Patentansprüche

1. Verfahren zur Herstellung einer Schleifscheibe, wobei eine Vorderseite dieser Scheibe mit mindestens einem Schleifsegment versehen ist, und die Schleifscheibe mindestens eine Stütze (1) aufweist, wobei das mindestens eine Schleifsegment (2) durch Laserschweißen an der mindestens einen Stütze (1) befestigt ist, **dadurch gekennzeichnet, dass** ein Laserstrahl (5) an die Rückseite dieser mindestens einen Stütze (1) angelegt wird, und zwar im Wesentlichen senkrecht dazu.

2. Verfahren nach Anspruch 1, **dadurch gekennzeichnet, dass** die mindestens eine Stütze (1) durch die Scheibe gebildet wird.

3. Verfahren nach einem der vorhergehenden Ansprüche, **dadurch gekennzeichnet, dass** das Schweißen des mindestens einen Segments (2) die Herstellung mehrerer Schweißnähte umfasst.

4. Verfahren nach einem der vorhergehenden Ansprüche, **dadurch gekennzeichnet, dass** mindestens ein Segment (2) eine Zwischenschicht (4) aufweist, die keine Schleifkörner umfasst.

5. Schleifscheibe mit einer Stütze (1), wobei eine Vorderseite dieser Scheibe mit mindestens einem Schleifsegment versehen ist und die Schleifscheibe mindestens eine Stütze (1) aufweist, wobei das mindestens eine Schleifsegment (2) durch Laserschweißen an der mindestens einen Stütze (1) befestigt ist, **dadurch gekennzeichnet, dass** ein Laserstrahl (5) an die Rückseite dieser mindestens einen Stütze (1) angelegt wird, und zwar im Wesentlichen senkrecht dazu.

## Claims

1. Method of manufacturing an abrasive grinding disc, a front face of this disc being equipped with at least one abrasive segment, comprising at least one support (1), the at least one abrasive segment (2) being fixed to the at least one support (1) by laser welding, **characterized by** a laser beam (5) being applied to the rear face of the at least one support (1), substantially at right angles to the rear face of this at least one support (1).

2. Method according to Claim 1, **characterized in that** the at least one support (1) consists of the disc.

3. Method according to either one of the preceding claims, **characterized in that** the welding of the at least one segment (2) involves a number of weld runs.

4. Method according to any one of the preceding claims, **characterized in that** at least one segment (2) has an intermediate layer (4) containing no abrasive grits.

5. Abrasive grinding disc comprising a support (1), a front face of this disc being equipped with at least one abrasive segment, comprising at least one support (1), the at least one abrasive segment (2) being fixed to the at least one support (1) by laser welding, **characterized by** a laser beam (5) being applied to the rear face of the at least one support (1), substantially at right angles to the rear face of this at least one support (1).
